# EUROPEAN PATENT APPLICATION

(11) **EP 4 546 630 A1**
(43) Date of publication of application: **30.04.2025**
(21) Application number: 24201339.9
(22) Date of filing: 19.09.2024
(51) Int. Cl.: H02M 3/00, H02M 3/335, H02M 1/00

(54) **THREE-PHASE RESONANT DC-DC CONVERTER**

(30) Priority: 27.10.2023 US 202363593549 P
(71) Applicant: Delta Electronics (Norway) AS, 3003 Drammen (NO)
(72) Inventor: BRASTAD, Jan, Tore, N-3015 Drammen (NO); Myhre, Erik, N-1385 Asker (NO); BOUCHEZ, Boris, N-3320 Vestfossen (NO)
(74) Representative: Onsagers AS

(57) **Abstract**

The present invention describes a three phase resonant DC-DC converter for converting a first DC voltage between two first terminals to a second DC voltage between two second terminals. The converter comprises a transformer device with three primary windings and three secondary windings, a switching circuit, a rectifying circuit, a resonant tank device, a secondary capacitor, and a control circuit. The resonant tank device has a primary side resonant tank device with three resonant inductors and three resonant capacitors connected to the primary windings. The converter further includes three clamping diodes between each of the second primary terminals of the primary windings and the first positive terminal, and three further clamping diodes between the first negative terminal and each of the second primary terminals of the primary windings.

## Description

### FIELD OF THE INVENTION

The present invention relates to a three phase resonant DC-DC converter for converting a first DC voltage to a second DC voltage.

### BACKGROUND OF THE INVENTION

Resonant converters are typically used to convert an uncontrolled DC voltage (the uncontrolled DC voltage typically being the output of an AC-DC converter) to a controlled DC voltage as required by the load (the load typically being data centers, telecommunication equipment etc.).

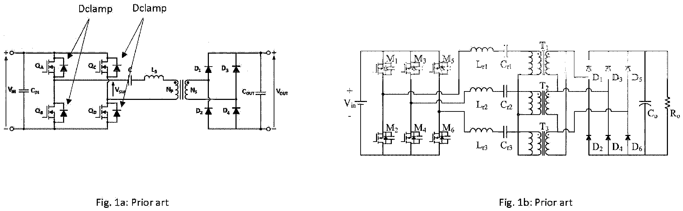

In the publication "Topology Investigation for Front End DC-DC Power Conversion for Distributed Power System", Bo Yang, September 12, 2003, chapter 5 single-phase LLC resonant converters are discussed. In chapter 5.2, different types of overload/short circuit protection are discussed. Such protection can be implemented in control software, such as increasing switching frequency (chapter 5.2.1) or by hybrid control of PWM and variable frequency control (chapter 5.2.2). Such protection can also be implemented in hardware, by using clamping diodes (chapter 5.2.2). Fig. 1a illustrates a single phase full bridge LLC resonant converter with clamping diodes Dclamp.

Three-phase LLC resonant converters or so-called interleaved LLC resonant converters are also known. These have some advantages such as a smaller output capacitor. However, they have also some disadvantages, such as an additional transformer which increases size, mass and cost of the converter.

A prior art three-phase LLC resonant DC-DC converter is shown in Fig. 1b.

One object of the present invention is to improve prior art.

More specifically, one object of the present invention is to provide a three-phase LLC resonant DC-DC converter where software-based short circuit protection can be avoided.

### SUMMARY OF THE INVENTION

The present invention relates to a three phase resonant DC-DC converter for converting a first DC voltage to a second DC voltage, wherein the converter comprises:
- a transformer device comprising three primary windings and three secondary windings, each primary winding comprising a first primary terminal and a second primary terminal and each secondary winding comprising a first secondary terminal and a second secondary terminal;
- a switching circuit having a first side comprising a first positive terminal and a first negative terminal forming first terminals of the converter, and a second side comprising a first SC node, a second SC node and a third SC node connected to the primary windings of the transformer device respectively;
- a rectifying circuit having a first side comprising RC nodes connected to the secondary windings of the transformer device respectively and a second side comprising a second positive terminal and a second negative terminal forming second terminals of the converter;
- a resonant tank device comprising a primary side resonant tank device connected between the first SC node, the second SC node and the third SC node of the switching circuit and the primary terminals of the three primary windings of the transformer device;
- a secondary capacitor connected between the second positive terminal and the second negative terminal;
- a control circuit for controlling the switching circuit;
   wherein the first DC voltage is defined as the voltage between the first positive terminal and the first negative terminal;
   wherein the second DC voltage is defined as the voltage between the second positive terminal and the second negative terminal;
   characterized in that:
- the primary side resonant tank device comprises a first resonant inductor connected between the first SC node of the switching circuit and the first primary terminal of the first primary winding, a second resonant inductor connected between the second SC node of the switching circuit and the first primary terminal of the second primary winding and a third resonant inductor connected between the third SC node of the switching circuit and the first primary terminal of the third primary winding;
- the primary side resonant tank device comprises a first resonant capacitor connected between a resonant tank node and the second primary terminal of the first primary winding, a second resonant capacitor connected between the resonant tank node and the second primary terminal of the second primary winding, and a third resonant capacitor connected between the resonant tank node and the second primary terminal of the third primary winding;
- the converter comprises three clamping diodes between each of the second primary terminals of the primary windings and the first positive terminal;
- the converter comprises three further clamping diodes between the first negative terminal and each of the second primary terminals of the primary windings.

The first positive terminal and the first negative terminal are typically referred to as the input terminals of the converter. The second positive terminal and the second negative terminal are typically referred to as the output terminals of the converter.

A load is typically connected between the second positive terminal and the second negative terminal. Hence, the second DC voltage may represent the load voltage.

The three clamping diodes between each of the second primary terminals of the primary windings and the first positive converter terminal may comprise:
- a first clamping diode connected with its anode to the second primary terminal of the first primary winding and with its cathode connected to the first positive converter terminal;
- a second clamping diode connected with its anode to the second primary terminal of the second primary winding and with its cathode connected to the first positive converter terminal;
- a third clamping diode connected with its anode to the second primary terminal of the third primary winding and with its cathode connected to the first positive converter terminal; and
   wherein the three further clamping diodes between the first negative converter terminal and each of the second primary terminals of the primary windings comprise:
- a fourth diode connected with its anode to the first negative converter terminal and with its cathode connected to the second primary terminal of the first primary winding;
- a fifth diode connected with its anode to the first negative converter terminal and with its cathode connected to the second primary terminal of the second primary winding;
- a sixth diode connected with its anode to the first negative converter terminal and with its cathode connected to the second primary terminal of the third primary winding.

The resonant tank node may be a floating neutral point of the primary side resonant tank device.

The converter may comprise a capacitor circuit connected between the resonant tank node and the first negative terminal.

The transformer device may comprise:
- a first transformer core onto which the first primary winding and the first secondary winding may be wound;
   a second transformer core onto which the second primary winding and the second secondary winding may be wound;
   a third transformer core onto which the third primary winding and the third secondary winding may be wound.

The first transformer core, the second transformer core and the third transformer core may be electromagnetically independent from each other.

As used herein, the term "electromagnetically independent" denotes that less than 10%, preferably less than 5 %, of the electromagnetic flux in one of the transformer cores is leaking to the other transformer cores.

Hence, electromagnetic flux generated by the first primary winding or by the first secondary winding in the first transformer core will not generate substantial electromagnetic flux in the second transformer core or in the third transformer core. Similarly, electromagnetic flux generated by the second primary winding or by the second secondary winding in the second transformer core will not generate substantial electromagnetic flux in the first transformer core or in the third transformer core. Similarly, electromagnetic flux generated by the third primary winding or by the third secondary winding in the third transformer core will not generate substantial electromagnetic flux in the first transformer core or in the second transformer core.

The first transformer core, the second transformer core and the third transformer core may be separate cores. The separate cores may be provided at a distance from each other. The first transformer core, the second transformer core and the third transformer core may be core sections of the same core, where air gaps or other electromagnetic insulation materials are preventing flux to be shared between the respective core sections.

The switching circuit may comprise:
- a first switch connected with its source terminal connected to the first SC node and with its drain terminal connected to the first positive converter terminal;
- a second switch connected with its source terminal connected to the first negative converter terminal and with its drain terminal connected to the first SC node;
- a third switch connected with its source terminal connected to the second SC node and with its drain terminal connected to the first positive converter terminal;
- a fourth switch connected with its source terminal connected to the first negative converter terminal and with its drain terminal connected to the second SC node;
- a fifth switch connected with its source terminal connected to the third SC node and with its drain terminal connected to the first positive converter terminal;
- a sixth switch connected with its source terminal connected to the first negative converter terminal and with its drain terminal connected to the third SC node.

The rectifier circuit may be a diode rectifier. The diode rectifier may comprise six diodes or twelve diodes. Alternatively, the rectifier circuit may comprise switches controlled by the control circuit. These switches may also be MOSFET switches, GaN switches etc.

The rectifier circuit may comprise:
- a first switch connected between the first RC node and the second positive converter terminal;
- a second switch connected between the second negative converter terminal and the first RC node;
- a third switch connected between the second RC node and the second positive converter terminal;
- a fourth switch connected between the second negative converter terminal and the second RC node;
- a fifth switch connected between the third RC node and the second positive converter terminal;
- a sixth switch connected between the second negative converter terminal and the third RC node;
- a seventh switch connected between the fourth RC node and the second positive converter terminal;
- a eight switch connected between the second negative converter terminal and the fourth RC node;
- a ninth switch connected between the fifth RC node and the second positive converter terminal;
- a tenth switch connected between the second negative converter terminal and the fifth RC node;
- a eleventh switch connected between the sixth RC node and the second positive converter terminal;
- a twelfth switch connected between the second negative converter terminal and the sixth RC node.

The first RC node of the rectifier circuit may be connected directly to the first secondary terminal of the first secondary winding, the second RC node of the rectifier circuit may be connected directly to the second secondary terminal of the first secondary winding, the third RC node of the rectifier circuit may be connected directly to the first secondary terminal of the second secondary winding, the fourth RC node of the rectifier circuit may be connected directly to the second secondary terminal of the second secondary winding, the fifth RC node of the rectifier circuit may be connected directly to the first secondary terminal of the third secondary winding, the sixth RC node of the rectifier circuit may be connected directly to the second secondary terminal of the third secondary winding.

The resonant tank device may comprise a secondary side resonant tank device on the secondary side of the transformer device.

The secondary side resonant tank device may comprise a fourth resonant capacitor, a fifth resonant capacitor and a sixth resonant capacitor, and further may comprise a fourth resonant inductor, a fifth resonant inductor and a sixth resonant inductor.

The fourth resonant capacitor and the fourth resonant inductor may be connected in series between the first secondary terminal of the first secondary winding and the first RC node of the rectifier circuit;
- the fifth resonant capacitor and the fifth resonant inductor may be connected in series between the first secondary terminal of the second secondary winding and the third RC node of the rectifier circuit;
- the sixth resonant capacitor and the sixth resonant inductor may be connected in series between the first secondary terminal of the third secondary winding and the fifth RC node of the rectifier circuit.

The fourth resonant inductor may be connected between the first secondary terminal of the first secondary winding and the first RC node of the rectifier circuit;
- the fourth resonant capacitor may be connected between the second secondary terminal of the first secondary winding and a second resonant tank node;
- the fifth resonant inductor may be connected between the first secondary terminal of the second secondary winding and the second RC node of the rectifier circuit;
- the fifth resonant capacitor may be connected between the second secondary terminal of the second secondary winding and the second resonant tank node;
- the sixth resonant inductor may be connected between the first secondary terminal of the third secondary winding and the third RC node of the rectifier circuit;
- the sixth resonant capacitor may be connected between the second secondary terminal of the third secondary winding and the second resonant tank node.

The converter may comprise clamping diodes also on the secondary side of the transformer device.

The converter may comprise three clamping diodes between each of the second secondary terminals of the secondary windings and the second positive terminal; and three further clamping diodes between the second negative terminal and each of the second secondary terminals of the secondary windings.

The three clamping diodes between each of the second secondary terminals of the secondary windings and the second positive converter terminal comprise:
- a seventh clamping diode connected with its anode to the second secondary terminal of the first secondary winding and with its cathode connected to the second positive converter terminal;
- a eight clamping diode connected with its anode to the second secondary terminal of the second secondary winding and with its cathode connected to the second positive converter terminal;
- a ninth clamping diode connected with its anode to the second secondary terminal of the third secondary winding and with its cathode connected to the second positive converter terminal; and
wherein the three further clamping diodes between the second negative converter terminal and each of the second secondary terminals of the secondary windings comprise:
- a tenth diode connected with its anode to the second negative converter terminal and with its cathode connected to the second secondary terminal of the first secondary winding;
- a eleventh diode connected with its anode to the second negative converter terminal and with its cathode connected to the second secondary terminal of the second secondary winding;
- a twelfth diode connected with its anode to the second negative converter terminal and with its cathode connected to the second secondary terminal of the third secondary winding.

The control circuit may be configured to increase a current flowing out from the second positive terminal for a period of time in response to a short circuit situation may be detected by the control circuit.

### DETAILED DESCRIPTION

In the following, detailed embodiments of the invention will be described with reference to the enclosed drawings, where:
Fig. 1a illustrates a prior art single-phase LLC resonant DC-DC converter with clamping diodes;
Fig. 1b illustrates a prior art three-phase LLC resonant DC-DC converter;
Fig. 2 illustrates a first embodiment of the three-phase LLC resonant DC-DC converter with protection diodes;
Fig. 3 is an enlarged view of the resonant tank device and the transformer device of Fig. 2 with an additional capacitor circuit;
Fig. 4 illustrates a second embodiment in the form of a three-phase CLLC resonant DC-DC converter with protection diodes;
Fig. 5 illustrates a third embodiment in the form of a three-phase CLLC resonant DC-DC converter with a double set of protection diodes;
Fig. 6 is an enlarged view of the transformer device and the second resonant circuit of fig. 6 with an additional capacitor circuit;
Fig. 7 illustrates the transformer device of Fig. 2;
Fig. 8 illustrates a power supply system a number of three-phase LLC resonant DC-DC converters with clamping diodes;
Fig. 9a shows a short circuit current for a converter with clamping diodes;
Fig. 9b shows a short circuit current for a converter without clamping diodes;
Fig. 9c shows the switching frequency of the control circuit before, during and after a short circuit current.

### First embodiment

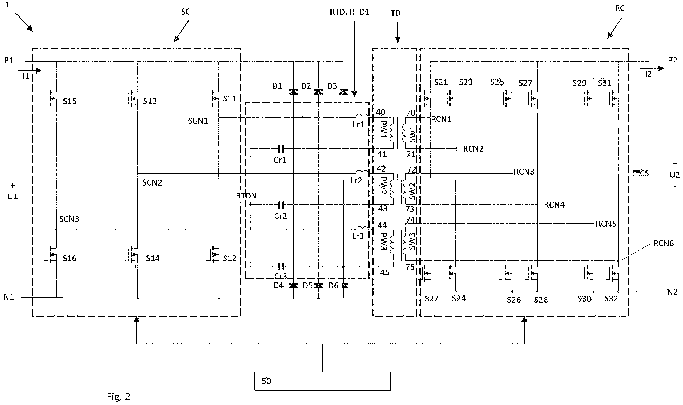

It is now referred to Fig. 2, where a first embodiment of a three phase resonant DC-DC converter 1 is shown. The converter 1 comprises a switching circuit SC (indicated as a dashed box), a resonant tank device RTD (also indicated as a dashed box), a transformer device TD (also indicated as a dashed box) and a rectifying circuit RC (also indicated as a dashed box), in addition to further electric components, which will be described below.

### Switching circuit SC of the first embodiment

The switching circuit SC has a first side (left side of switching circuit SC in Fig. 2) with a first positive terminal P1 and a first negative terminal N1. The first positive terminal P1 and the first negative terminal N1 are the first terminals or input terminals of the converter 1 and the converter 1 is defined with a first DC voltage U1 between the first positive terminal P1 and the first negative terminal N1. A DC voltage source is typically connected between the first positive terminal P1 and the first negative terminal N1.

The switching circuit SC has a second side (right side of switching circuit SC in Fig. 2) comprising a first SC node SCN1, a second SC node SCN2 and a third SC node SCN3.

The switching circuit SC has six switches connected between the first positive terminal P1, the first negative terminal N1, the first SC node SCN1, the second SC node SCN2 and the third SC node SCN3. These switches may be referred to as primary side switches. These switches are:
- a first switch S11 connected with its source terminal connected to the first SC node SCN1 and with its drain terminal connected to the first positive converter terminal P1;
- a second switch S12 connected with its source terminal connected to the first negative converter terminal N1 and with its drain terminal connected to the first SC node SCN1;
- a third switch S13 connected with its source terminal connected to the second SC node SCN2 and with its drain terminal connected to the first positive converter terminal P1;
- a fourth switch S14 connected with its source terminal connected to the first negative converter terminal N1 and with its drain terminal connected to the second SC node SCN2;
- a fifth switch S15 connected with its source terminal connected to the third SC node SCN3 and with its drain terminal connected to the first positive converter terminal P1;
- a sixth switch S16 connected with its source terminal connected to the first negative converter terminal N1 and with its drain terminal connected to the third SC node SCN3.

The above switches may be MOSFET switches, GaN switches or other types of switches.

### Rectifying circuit RC of the first embodiment

The rectifying circuit RC has a first side (left side of rectifying circuit RC in Fig. 2) comprising RC nodes RCN1, RCN2, RCN3, RCN4, RCN5, RCN6 and a second side (right side of rectifying circuit RC in Fig. 2) comprising a second positive terminal P2 and a second negative terminal N2.

The RC nodes RCN1, RCN2, RCN3, RCN4, RCN5, RCN6 may be referred to as a first RC node RCN1, a second RC node RCN2, a third RC node RCN3, a fourth RC node RCN4, a fifth RC node RCN5 and a sixth RC node RCN6 of the rectifying circuit RC.

The second positive terminal P2 and the second negative terminal N2 are the second terminals or output terminals of the converter 1 and the converter 1 is defined with a second DC voltage U2 between the second positive terminal P2 and the second negative terminal N2. A load is typically connected between the second positive terminal P2 and the second negative terminal N2. Hence, the second DC voltage U2 may represent the load voltage.

The rectifying circuit RC comprises twelve switches connected between the RC nodes RCN1, RCN2, RCN3, RCN4, RCN5, RCN6, the second positive terminal P2 and the second negative terminal N2. These switches may be referred to as secondary side switches. These switches are:
- a first switch S21 connected with its source terminal connected to the first RC node RCN1 and with its drain terminal connected to the second positive converter terminal P2;
- a second switch S22 connected with its source terminal connected to the second negative converter terminal N2 and with its drain terminal connected to the first RC node RCN1;
- a third switch S23 connected with its source terminal connected to the second RC node RCN2 and with its drain terminal connected to the second positive converter terminal P2;
- a fourth switch S24 connected with its source terminal connected to the second negative converter terminal N2 and with its drain terminal connected to the second RC node RCN2;
- a fifth switch S25 connected with its source terminal connected to the third RC node RCN3 and with its drain terminal connected to the second positive converter terminal P2;
- a sixth switch S26 connected with its source terminal connected to the second negative converter terminal N2 and with its drain terminal connected to the third RC node RCN3;
- a seventh switch S27 connected with its source terminal connected to the fourth RC node RCN4 and with its drain terminal connected to the second positive converter terminal P2;
- a eight switch S28 connected with its source terminal connected to the second negative converter terminal N2 and with its drain terminal connected to the fourth RC node RCN4;
- a ninth switch S29 connected with its source terminal connected to the fifth RC node RCN5 and with its drain terminal connected to the second positive converter terminal P2;
- a tenth switch S30 connected with its source terminal connected to the second negative converter terminal N2 and with its drain terminal connected to the fifth RC node RCN5;
- a eleventh switch S31 connected with its source terminal connected to the sixth RC node RCN6 and with its drain terminal connected to the second positive converter terminal P2;
- a twelfth switch S32 connected with its source terminal connected to the second negative converter terminal N2 and with its drain terminal connected to the sixth RC node RCN6.

The above switches may be MOSFET switches, GaN switches or other types of switches.

### Transformer device TD of the first embodiment

The transformer device TD comprises three primary windings PW1, PW2, PW3 (left side of transformer device TD in Fig. 2) and three secondary windings SW1, SW2, SW3 (right side of transformer device TD in Fig. 2).

The first primary winding PW1 has a first primary terminal 40 and a second primary terminal 41. The second primary winding PW2 has a first primary terminal 42 and a second primary terminal 43. The third primary winding PW3 has a first primary terminal 44 and a second primary terminal 45.

The first secondary winding SW1 has a first secondary terminal 70 and a second secondary terminal 71. The second secondary winding SW2 has a first secondary terminal 72 and a second secondary terminal 73. The third secondary winding SW3 has a first secondary terminal 74 and a second secondary terminal 75.

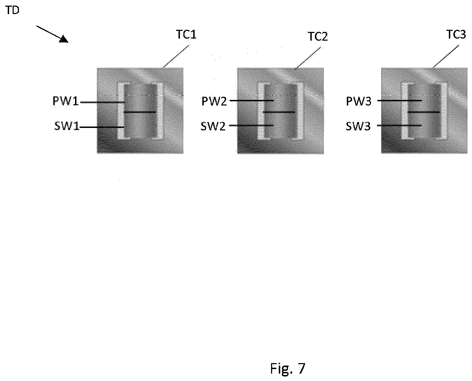

It is now referred to Fig. 7. Here it is shown that the transformer device TD comprises a first transformer core TC1, a second transformer core TC2 and a third transformer core TC3.

The first primary winding PW1 and the first secondary winding SW1 are wound onto the first core TC1. The second primary winding PW2 and the second secondary winding SW2 are wound onto the second core TC2. The third primary winding PW3 and the third secondary winding SW3 are wound onto the third core TC3.

As indicated in Fig. 7, the transformer cores TC1, TC2, TC3 are separate from each other, and provided at a distance from each other. In this way, it is achieved that the first transformer core TC1, the second transformer core TC2 and the third transformer core TC3 are electromagnetically independent from each other.

As used herein, the term "electromagnetically independent" denotes that less than 10%, preferably less than 5 %, of the electromagnetic flux in one of the transformer cores is leaking to the other transformer cores.

### Resonant tank device RTD of the first embodiment

It is now referred to Fig. 2 again. Here it is shown that the resonant tank device RTD comprises a primary side resonant tank RTD1 being connected between the first SC node SCN1, the second SC node SCN2 and the third SC node SCN3 of the switching circuit SC and the primary terminals 40, 41, 42, 43, 44, 45 of the three primary windings PW1, PW2, PW3 of the transformer device TD.

The primary side resonant tank device RTD1 also comprises a resonant tank node RTDN.

The primary side resonant tank device RTD1 comprises a first resonant inductor Lr1 connected between the first SC node SCN1 of the switching circuit SC and the first primary terminal 40 of the first primary winding PW1, a second resonant inductor Lr2 connected between the second SC node SCN2 of the switching circuit SC and the first primary terminal 42 of the second primary winding PW2 and a third resonant inductor Lr3 connected between the third SC node SCN3 of the switching circuit SC and the first primary terminal 44 of the third primary winding PW3.

In addition, the primary side resonant tank device RTD1 comprises a first resonant capacitor Cr1 connected between a resonant tank node RTDN and the second primary terminal 41 of the first primary winding PW1, a second resonant capacitor Cr2 connected between the resonant tank node RTDN and the second primary terminal 43 of the second primary winding PW2, and a third resonant capacitor Cr3 connected between the resonant tank node RTDN and the second primary terminal 45 of the third primary winding PW3. The resonant capacitors Cr1, Cr2, Cr3 here form a star connection.

In the present embodiment, the resonant tank node RTDN is considered as a floating neutral point of the primary side resonant tank device RTD1.

### Additional information about the first embodiment

In the present embodiment, the first RC node RCN1 of the rectifier circuit RC is connected directly to the first secondary terminal 70 of the first secondary winding SW1, the second RC node RCN2 of the rectifier circuit RC is connected directly to the second secondary terminal 71 of the first secondary winding SW1, the third RC node RCN3 of the rectifier circuit RC is connected directly to the first secondary terminal 72 of the second secondary winding SW2, the fourth RC node RCN4 of the rectifier circuit RC is connected directly to the second secondary terminal 73 of the second secondary winding SW2, the fifth RC node RCN5 of the rectifier circuit RC is connected directly to the first secondary terminal 74 of the third secondary winding SW3, and the sixth RC node RCN6 of the rectifier circuit RC is connected directly to the second secondary terminal 75 of the third secondary winding SW3.

The converter 1 further comprises a capacitor CS connected between the second positive terminal P2 and the second negative terminal N2. As this capacitor CS is connected on the secondary side with respect to the transformer device TD, it is referred to herein as a secondary capacitor CS.

The converter 1 further comprises a control circuit 50 for controlling the switches of the switching circuit SC and for controlling the switches of the rectifying circuit RC. Typically, the control circuit 50 comprises a digital signal processor and software controlled to turn the switches on/off based on signals from sensors, such as signals measuring parameters representative of the first voltage U1, the second voltage U2, a first current I1 flowing into the first positive terminal P1 and/or a second current I2 flowing out from the second positive terminal P2.

Finally, the converter 1 comprises six clamping diodes D1, D2, D4, D5, D6. These six clamping diodes are:
- a first clamping diode D1 connected with its anode to the second primary terminal 41 of the first primary winding PW1 and with its cathode connected to the first positive converter terminal P1;
- a second clamping diode D2 connected with its anode to the second primary terminal 43 of the second primary winding PW2 and with its cathode connected to the first positive converter terminal P1;
- a third clamping diode D3 connected with its anode to the second primary terminal 43 of the third primary winding PW3 and with its cathode connected to the first positive converter terminal P1; and
- a fourth diode D4 connected with its anode to the first negative converter terminal N1 and with its cathode connected to the second primary terminal 41 of the first primary winding PW1;
- a fifth diode D5 connected with its anode to the first negative converter terminal N1 and with its cathode connected to the second primary terminal 43 of the second primary winding PW2; and
- a sixth diode D6 connected with its anode to the first negative converter terminal N1 and with its cathode connected to the second primary terminal 45 of the third primary winding PW3.

The control circuit 50 is configured to control the switches by means of a PWM control method.

### Second embodiment

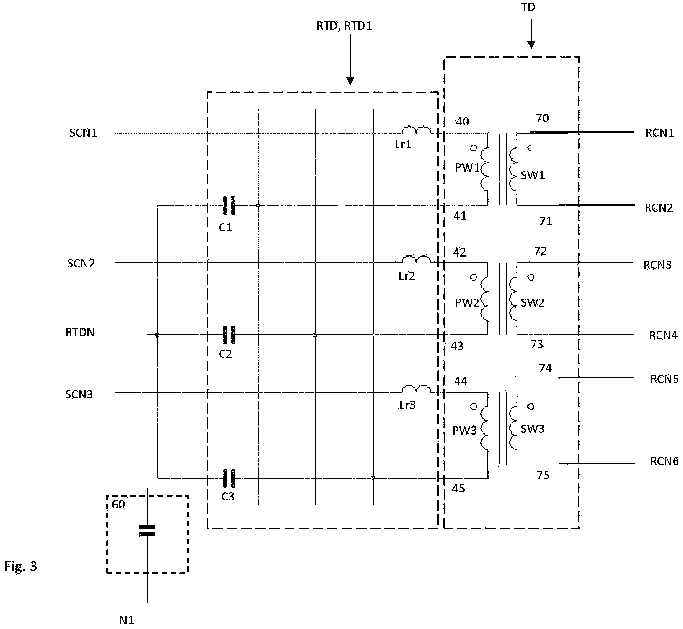

A second embodiment of the converter 1 will be described with reference to Fig. 3. The converter 1 of the second embodiment is similar to the converter 1 of the first embodiment. Various differences between the second embodiment and the first embodiment will be described herein.

In the second embodiment, the resonant tank node RTDN is not a floating neutral. Instead, the converter 1 comprises a capacitor circuit 60 connected between the resonant tank node RTDN and the first negative terminal N1. The capacitor circuit 60 may comprise one or more capacitors.

The purpose of the capacitor circuit 60 is to reduce electromagnetic interference of the circuit under at least some operating conditions.

### Third embodiment

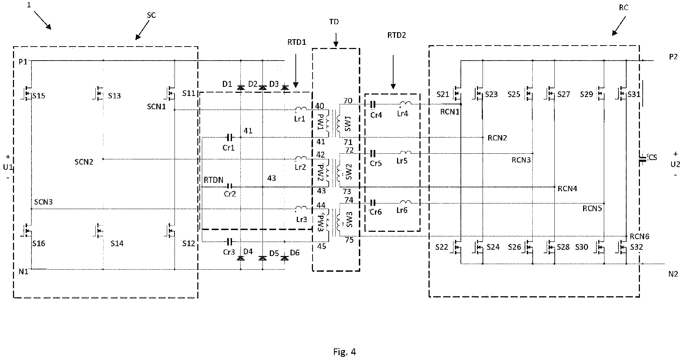

A third embodiment of the converter 1 will be described with reference to Fig. 4. The converter 1 of the third embodiment is similar to the converter 1 of the first embodiment. Various differences between the third embodiment and the first embodiment will be described herein.

In the present embodiment, the resonant tank device RTD comprises a secondary side resonant tank device RTD2 on the secondary side of the transformer device TD in addition to the primary side resonant tank device RTD1.

The secondary side resonant tank device RTD2 comprises a fourth resonant capacitor Cr4, a fifth resonant capacitor Cr5 and a sixth resonant capacitor Cr6, and further comprises a fourth resonant inductor Lr4, a fifth resonant inductor Lr5 and a sixth resonant inductor Lr6.

As shown in Fig. 4, the fourth resonant capacitor Cr4 and the fourth resonant inductor Lr4 are connected in series between the first secondary terminal 70 of the first secondary winding SW1 and the first RC node RCN1 of the rectifier circuit RC. The fifth resonant capacitor Cr5 and the fifth resonant inductor Lr5 are connected in series between the first secondary terminal 72 of the second secondary winding SW2 and the third RC node RCN3 of the rectifier circuit RC. The sixth resonant capacitor Cr6 and the sixth resonant inductor Lr6 are connected in series between the first secondary terminal 74 of the third secondary winding SW3 and the fifth RC node RCN5 of the rectifier circuit RC.

It should be noted that in an alternative to the third embodiment, the primary side resonant tank device RTD1 comprises a capacitor circuit 60 connected between the resonant tank node RTDN and the first negative terminal N1, i.e. similar to the second embodiment of Fig. 3 above.

This embodiment is typically referred to as a three-phase CLLC resonant converter. The clamping diodes also here protect the primary side resonant capacitors Cr1, Cr2, Cr3 from over-voltages, and protects the primary side switches from over-currents.

### Fourth embodiment

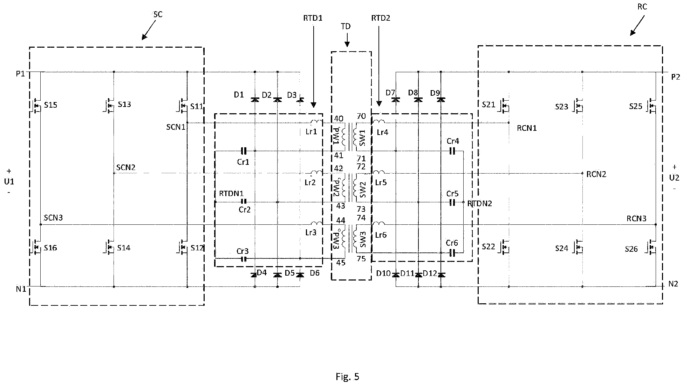

A fourth embodiment of the converter 1 will be described with reference to Fig. 5. The converter 1 of the fourth embodiment is similar to the converter 1 of the third embodiment. Various differences between the fourth embodiment and the third embodiment will be described herein.

Also here, the resonant tank device RTD comprises a primary side resonant tank device RTD1 and a secondary side resonant tank device RTD2.

The secondary side resonant tank device RTD2 here also comprises the three resonant inductors Lr4, Lr5, Lr6 and the three resonant capacitors Cr4, Cr5, Cr6. However, the secondary side resonant tank device RTD2 here comprises a second resonant tank node RTDN2. Hence, as shown in Fig. 5, the resonant tank node of the first resonant tank device RTD1 is indicated as a first resonant tank node RTDN 1.

As shown in Fig. 5, the fourth resonant inductor Lr4 is connected between the first secondary terminal 70 of the first secondary winding SW1 and the first RC node RCN1 of the rectifier circuit RC. The fourth resonant capacitor Cr4 is connected between the second secondary terminal 71 of the first secondary winding SW1 and the second resonant tank node RTDN2. The fifth resonant inductor Lr5 is connected between the first secondary terminal 72 of the second secondary winding SW2 and the second RC node RCN2 of the rectifier circuit RC. The fifth resonant capacitor Cr5 is connected between the second secondary terminal 73 of the second secondary winding SW2 and the second resonant tank node RTDN2. The sixth resonant inductor Lr6 is connected between the first secondary terminal 73 of the third secondary winding SW3 and the third RC node RCN3 of the rectifier circuit RC. The sixth resonant capacitor Cr6 is connected between the second secondary terminal 75 of the third secondary winding SW3 and the second resonant tank node RTDN2.

The second resonant tank node RTDN2 is in the present embodiment a floating neutral point.

The fourth embodiment of the converter 1 further comprises six clamping diodes on the secondary side of the transformer device TD. These clamping diodes are:
- a seventh clamping diode D7 connected with its anode to the second secondary terminal 71 of the first secondary winding SW1 and with its cathode connected to the second positive converter terminal P2;
- a eight clamping diode D8 connected with its anode to the second secondary terminal 73 of the second secondary winding SW2 and with its cathode connected to the second positive converter terminal P2;
- a ninth clamping diode D9 connected with its anode to the second secondary terminal 73 of the third secondary winding SW3 and with its cathode connected to the second positive converter terminal P2; and
- a tenth diode D10 connected with its anode to the second negative converter terminal N2 and with its cathode connected to the second secondary terminal 71 of the first secondary winding SW1;
- a eleventh diode D11 connected with its anode to the second negative converter terminal N2 and with its cathode connected to the second secondary terminal 73 of the second secondary winding SW2;
- a twelfth diode D12 connected with its anode to the second negative converter terminal N2 and with its cathode connected to the second secondary terminal 75 of the third secondary winding SW3.

The fourth embodiment is also referred to as a three-phase CLLC resonant converter. The clamping diodes on the secondary side will protect the resonant capacitors Cr4, Cr5, Cr6 from over-voltages.

### Fifth embodiment

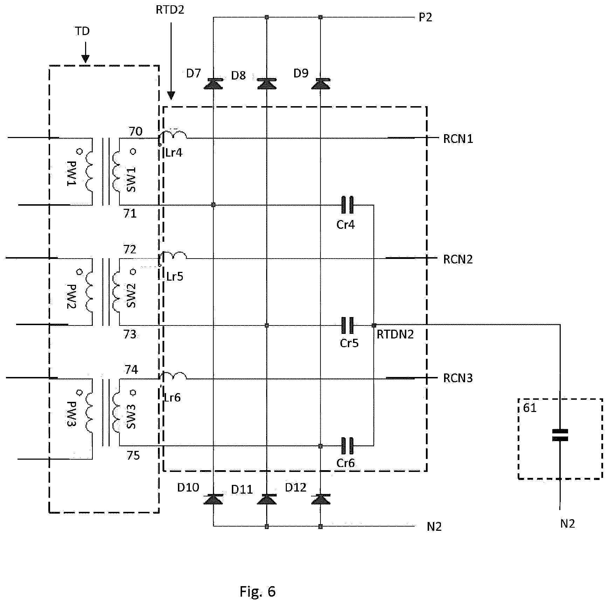

A fifth embodiment of the converter 1 will be described with reference to Fig. 6. The converter 1 of the fifth embodiment is similar to the converter 1 of the fourth embodiment of Fig. 5. Various differences between the fifth embodiment and the fourth embodiment will be described herein.

In the fifth embodiment, the second resonant tank node RTDN2 is not a floating neutral point. Instead, the converter 1 comprises a capacitor circuit 61 connected between the second resonant tank node RTDN2 and the second negative terminal N2.

The purpose of the capacitor circuit 61 is to reduce electromagnetic interference of the circuit.

### Operation of the second embodiment

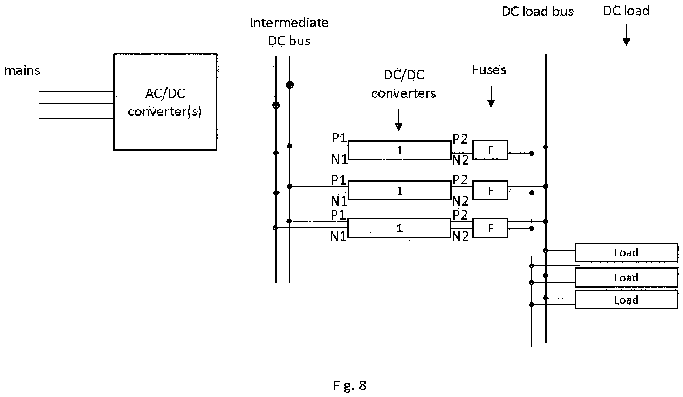

It is now referred to Fig. 8. Here it is shown a power supply system, with one or more AC-DC converters converting AC power from the mains to an intermediate DC bus. One or more three phase resonant DC-DC converters 1 of the above second embodiment are connected with its first terminals P1, N2 to the intermediate DC bus and its second terminals P2, N2 to a DC load bus to which one or more DC loads are connected. It is further shown that each converter 1 has a fuse F between its second terminals P2, N2 and the DC load bus.

A resonant frequency is defined in particular by the properties of the resonant inductors Lr1, Lr2, Lr3 and the resonant capacitors Cr1, Cr2, Cr3, possibly also together with properties of the primary windings PW1, PW2, PW3. When the switching frequency from the control circuit 50 is at the resonant frequency or close to resonant frequency of the first resonant tank device RTD1, the current in primary side switches S11, S12, S13, S14, S15, S16 can reach very high levels (for example during startup of circuit, overload or short circuit of the LLC output terminals P2, N2), which may damage the switches of the converter 1. In addition, the voltage levels of the resonant capacitors Cr1, Cr2, Cr3 may reach very high levels.

By means of the clamping diodes, the voltages of the resonant capacitors are clamped to the voltage level of the first voltage U1, which as described above typically will represent the intermediate DC bus voltage between the AC-DC converter and the DC-DC converter. In addition, the currents through the switches of the switching circuit SC are clamped and freewheeled when the voltage of the resonant capacitors has reached the DC link voltage.

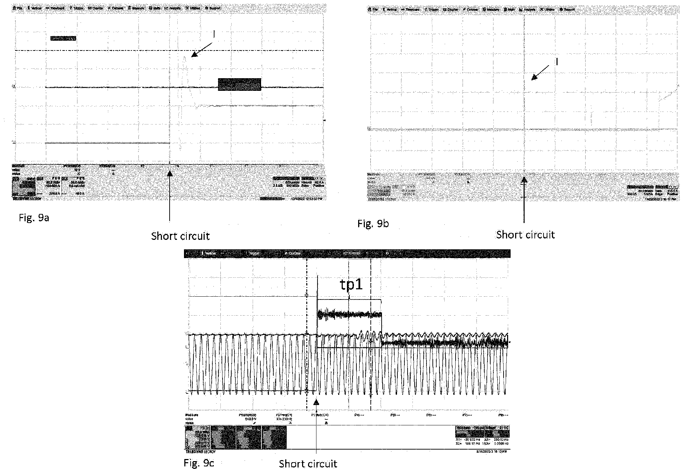

A short circuit situation for the converter 1 is shown in Fig. 9a. Here it is shown that a short circuit current (blue line) is clamped to a constant current really fast (time scale is 500µs/div) due to the clamping diodes. It should be noted that the current level is higher after the short circuit than before the short circuit.

This is caused by the control software, which after detection of the short circuit changes the frequency to increase the output current in order to cause the fuses F to blow. This is shown in Fig. 9c. Here, the switching frequency is changed for a period p1. Hence, as the fuse F will blow, the operator of the power supply system is enabled to check if maintenance etc. are necessary, for example to disconnect equipment causing the short circuit situation from the power supply system.

It should be noted that the control software typically is slow when compared to the short circuit. Hence, during the first microseconds and even during the first milliseconds of the short circuit situation, the control software will not be able to change anything. This can be seen in Fig. 9c, where it is shown that there is a short period of time from the short circuit is occurring until the start of period tp1 at which point the control software is actually capable of detecting and do something. However, during this first period of the short circuit situation, the clamping diodes will offer protection both for the converter itself, but also for the load.

In Fig. 9b, the result of a corresponding short circuit situation is shown for a corresponding converter without clamping diodes. Instead, the control software is used to reduce the damaging effects of the short circuit current. As shown in Fig. 9b, the current is much higher for a short period of time (due to the lack of clamping diodes), until the control software manages to turn all switches off. This current, even if it has a short duration, may be sufficient to damage components of the converter. More importantly, due to the short duration, the fuses F will most likely not blow. Hence, also the load will be vulnerable for the short circuit current.

In Fig. 9b, a subsequent current spike is shown. This spike is a result of the control software trying to restart the converter. However, as the short circuit is still present, the control software is turning the switches off again.

Hence, as described above, one of the advantages of the converter 1 is that it offers protection in the period from a short circuit situation occurs until the control software is able to detect and act upon the situation. In addition, it is achieved that the time and complexity of testing the control software for all operating conditions may be avoided.

### Alternative embodiments

In the above embodiments, the first transformer core TC1, the second transformer core TC2 and the third transformer core TC3 are separate from each other, in order to prevent or at least considerably reduce that flux generated in one of the cores will generate flux in the other cores.

In an alternative embodiment, the first transformer core TC1, the second transformer core TC2 and the third transformer core TC3 are core sections of one single core, where air gaps or other electromagnetic insulation materials are preventing or at least considerably reducing flux to be shared between the respective core sections.

In an alternative embodiment, the rectifier circuit RC is a diode rectifier. The diode rectifier may comprise six diodes or twelve diodes instead of the twelve or six switches of the above embodiments.

## Claims

1. A three phase resonant DC-DC converter (1) for converting a first DC voltage (U1) to a second DC voltage (U2), wherein the converter (1) comprises:
- a transformer device (TD) comprising three primary windings (PW1, PW2, PW3) and three secondary windings (SW1, SW2, SW3), each primary winding (PW1, PW2, PW3) comprising a first primary terminal (40, 42, 44) and a second primary terminal (41, 43, 45) and each secondary winding (SW1, SW2, SW3) comprising a first secondary terminal (70, 72, 74) and a second secondary terminal (71, 73, 75);
- a switching circuit (SC) having a first side comprising a first positive terminal (P1) and a first negative terminal (N1) forming first terminals of the converter (1), and a second side comprising a first SC node (SCN1), a second SC node (SCN2) and a third SC node (SCN3) connected to the primary windings (PW1, PW2, PW3) of the transformer device (TD) respectively;
- a rectifying circuit (RC) having a first side comprising RC nodes (RCN1, RCN2, RCN3, RCN4, RCN5, RCN6) connected to the secondary windings (SW1, SW2, SW3) of the transformer device (TD) respectively and a second side comprising a second positive terminal (P2) and a second negative terminal (N2) forming second terminals of the converter (1);
- a resonant tank device (RTD) comprising a primary side resonant tank device (RTD1) connected between the first SC node (SCN1), the second SC node (SCN2) and the third SC node (SCN3) of the switching circuit (SC) and the primary terminals (40, 41, 42, 43, 44, 45) of the three primary windings (PW1, PW2, PW3) of the transformer device (TD);
- a secondary capacitor (CS) connected between the second positive terminal (P2) and the second negative terminal (N2);
- a control circuit (50) for controlling the switching circuit (SC);
wherein the first DC voltage (U1) is defined as the voltage between the first positive terminal (P1) and the first negative terminal (N1);
wherein the second DC voltage (U2) is defined as the voltage between the second positive terminal (P2) and the second negative terminal (N2);
**characterized in that**:
- the primary side resonant tank device (RTD1) comprises a first resonant inductor (Lr1) connected between the first SC node (SCN1) of the switching circuit (SC) and the first primary terminal (40) of the first primary winding (PW1), a second resonant inductor (Lr2) connected between the second SC node (SCN2) of the switching circuit (SC) and the first primary terminal (42) of the second primary winding (PW2) and a third resonant inductor (Lr3) connected between the third SC node (SCN3) of the switching circuit (SC) and the first primary terminal (44) of the third primary winding (PW3);
- the primary side resonant tank device (RTD1) comprises a first resonant capacitor (Cr1) connected between a resonant tank node (RTDN) and the second primary terminal (41) of the first primary winding (PW1), a second resonant capacitor (Cr2) connected between the resonant tank node (RTDN) and the second primary terminal (43) of the second primary winding (PW2), and a third resonant capacitor (Cr3) connected between the resonant tank node (RTDN) and the second primary terminal (45) of the third primary winding (PW3);
- the converter (1) comprises three clamping diodes (D1, D2, D3) between each of the second primary terminals (41, 43, 45) of the primary windings (PW1, PW2, PW3) and the first positive terminal (P1);
- the converter (1) comprises three further clamping diodes (D4, D5, D6) between the first negative terminal (N1) and each of the second primary terminals (41, 43, 45) of the primary windings (PW1, PW2, PW3).

2. The three phase resonant DC-DC converter (1) according to claim 1, wherein the three clamping diodes (D1, D2, D3) between each of the second primary terminals (41, 43, 45) of the primary windings (PW1, PW2, PW3) and the first positive converter terminal (P 1) comprise:
- a first clamping diode (D1) connected with its anode to the second primary terminal (41) of the first primary winding (PW1) and with its cathode connected to the first positive converter terminal (P1);
- a second clamping diode (D2) connected with its anode to the second primary terminal (43) of the second primary winding (PW2) and with its cathode connected to the first positive converter terminal (P1);
- a third clamping diode (D3) connected with its anode to the second primary terminal (43) of the third primary winding (PW3) and with its cathode connected to the first positive converter terminal (P1); and
wherein the three further clamping diodes (D4, D5, D6) between the first negative converter terminal (N1) and each of the second primary terminals (41, 43, 45) of the primary windings (PW1, PW2, PW3) comprise:
- a fourth diode (D4) connected with its anode to the first negative converter terminal (N1) and with its cathode connected to the second primary terminal (41) of the first primary winding (PW1);
- a fifth diode (D5) connected with its anode to the first negative converter terminal (N1) and with its cathode connected to the second primary terminal (43) of the second primary winding (PW2);
- a sixth diode (D6) connected with its anode to the first negative converter terminal (N1) and with its cathode connected to the second primary terminal (45) of the third primary winding (PW3).

3. The three phase resonant DC-DC converter (1) according to claim 1 or 2, wherein the converter (1) comprises a capacitor circuit (60) connected between the resonant tank node (RTDN) and the first negative terminal (N1).

4. The three phase resonant DC-DC converter (1) according to any one of the above claims, wherein the transformer device (TD) comprises:
- a first transformer core (TC1) onto which the first primary winding (PW1) and the first secondary winding (SW1) are wound;
a second transformer core (TC2) onto which the second primary winding (PW2) and the second secondary winding (SW2) are wound;
a third transformer core (TC3) onto which the third primary winding (PW3) and the third secondary winding (SW3) are wound.

5. The three phase resonant DC-DC converter (1) according to claim 4, wherein the first transformer core (TC1), the second transformer core (TC2) and the third transformer core (TC3) are electromagnetically independent from each other.

6. The three phase resonant DC-DC converter (1) according to any one of the above claims, wherein the switching circuit (SC) comprises:
- a first switch (S11) connected with its source terminal connected to the first SC node (SCN1) and with its drain terminal connected to the first positive converter terminal (P1);
- a second switch (S12) connected with its source terminal connected to the first negative converter terminal (N1) and with its drain terminal connected to the first SC node (SCN1);
- a third switch (S13) connected with its source terminal connected to the second SC node (SCN2) and with its drain terminal connected to the first positive converter terminal (P1);
- a fourth switch (S14) connected with its source terminal connected to the first negative converter terminal (N1) and with its drain terminal connected to the second SC node (SCN2);
- a fifth switch (S15) connected with its source terminal connected to the third SC node (SCN3) and with its drain terminal connected to the first positive converter terminal (P1);
- a sixth switch (S16) connected with its source terminal connected to the first negative converter terminal (N1) and with its drain terminal connected to the third SC node (SCN3).

7. The three phase resonant DC-DC converter (1) according to any one of the above claims, wherein the rectifier circuit (RC) comprises:
- a first switch (S21) connected between the first RC node (RCN1) and the second positive converter terminal (P2);
- a second switch (S22) connected between the second negative converter terminal (N2) and the first RC node (RCN1);
- a third switch (S23) connected between the second RC node (RCN2) and the second positive converter terminal (P2);
- a fourth switch (S24) connected between the second negative converter terminal (N2) and the second RC node (RCN2);
- a fifth switch (S25) connected between the third RC node (RCN3) and the second positive converter terminal (P2);
- a sixth switch (S26) connected between the second negative converter terminal (N2) and the third RC node (RCN3);
- a seventh switch (S27) connected between the fourth RC node (RCN4) and the second positive converter terminal (P2);
- a eight switch (S28) connected between the second negative converter terminal (N2) and the fourth RC node (RCN4);
- a ninth switch (S29) connected between the fifth RC node (RCN5) and the second positive converter terminal (P2);
- a tenth switch (S30) connected between the second negative converter terminal (N2) and the fifth RC node (RCN5);
- a eleventh switch (S31) connected between the sixth RC node (RCN6) and the second positive converter terminal (P2);
- a twelfth switch (S32) connected between the second negative converter terminal (N2) and the sixth RC node (RCN6).

8. The three phase resonant DC-DC converter (1) according to claim 7, wherein:
- the first RC node (RCN1) of the rectifier circuit (RC) is connected directly to the first secondary terminal (70) of the first secondary winding (SW1), the second RC node (RCN2) of the rectifier circuit (RC) is connected directly to the second secondary terminal (71) of the first secondary winding (SW1), the third RC node (RCN3) of the rectifier circuit (RC) is connected directly to the first secondary terminal (72) of the second secondary winding (SW2), the fourth RC node (RCN4) of the rectifier circuit (RC) is connected directly to the second secondary terminal (73) of the second secondary winding (SW2), the fifth RC node (RCN5) of the rectifier circuit (RC) is connected directly to the first secondary terminal (74) of the third secondary winding (SW3), the sixth RC node (RCN6) of the rectifier circuit (RC) is connected directly to the second secondary terminal (75) of the third secondary winding (SW3).

9. The three phase resonant DC-DC converter (1) according to any one of the above claims, wherein the resonant tank device (RTD) further comprises a secondary side resonant tank device (RTD2) on the secondary side of the transformer device (TD).

10. The three phase resonant DC-DC converter (1) according to claim 9, wherein the secondary side resonant tank device (RTD2) comprises a fourth resonant capacitor (Cr4), a fifth resonant capacitor (Cr5) and a sixth resonant capacitor (Cr6), and further comprises a fourth resonant inductor (Lr4), a fifth resonant inductor (Lr5) and a sixth resonant inductor (Lr6).

11. The three phase resonant DC-DC converter (1) according to claim 10, wherein:
- the fourth resonant capacitor (Cr4) and the fourth resonant inductor (Lr4) are connected in series between the first secondary terminal (70) of the first secondary winding (SW1) and the first RC node (RCN1) of the rectifier circuit (RC);
- the fifth resonant capacitor (Cr5) and the fifth resonant inductor (Lr5) are connected in series between the first secondary terminal (72) of the second secondary winding (SW2) and the third RC node (RCN3) of the rectifier circuit (RC);
- the sixth resonant capacitor (Cr6) and the sixth resonant inductor (Lr6) are connected in series between the first secondary terminal (74) of the third secondary winding (SW3) and the fifth RC node (RCN5) of the rectifier circuit (RC).

12. The three phase resonant DC-DC converter (1) according to claim 10, wherein:
- the fourth resonant inductor (Lr4) is connected between the first secondary terminal (7) of the first secondary winding (SW1) and the first RC node (RCN1) of the rectifier circuit (RC);
- the fourth resonant capacitor (Cr4) is connected between the second secondary terminal (71) of the first secondary winding (SW1) and a second resonant tank node (RTDN2);
- the fifth resonant inductor (Lr5) is connected between the first secondary terminal (72) of the second secondary winding (SW2) and the second RC node (RCN2) of the rectifier circuit (RC);
- the fifth resonant capacitor (Cr5) is connected between the second secondary terminal (73) of the second secondary winding (SW2) and the second resonant tank node (RTDN2);
- the sixth resonant inductor (Lr6) is connected between the first secondary terminal (73) of the third secondary winding (SW3) and the third RC node (RCN3) of the rectifier circuit (RC);
- the sixth resonant capacitor (Cr6) is connected between the second secondary terminal (75) of the third secondary winding (SW3) and the second resonant tank node (RTDN2).

13. The three phase resonant DC-DC converter (1) according to claim 12, wherein the converter (1) comprises three clamping diodes (D7, D8, D9) between each of the second secondary terminals (71, 73, 75) of the secondary windings (SW1, SW2, SW3) and the second positive terminal (P2); and three further clamping diodes (D10, D11, D12) between the second negative terminal (N2) and each of the second secondary terminals (71, 73, 75) of the secondary windings (SW1, SW2, SW3).

14. The three phase resonant DC-DC converter (1) according to claim 13, wherein the three clamping diodes (D7, D8, D9) between each of the second secondary terminals (71, 73, 75) of the secondary windings (SW1, SW2, SW3) and the second positive converter terminal (P2) comprise:
- a seventh clamping diode (D7) connected with its anode to the second secondary terminal (71) of the first secondary winding (SW1) and with its cathode connected to the second positive converter terminal (P2);
- a eight clamping diode (D8) connected with its anode to the second secondary terminal (73) of the second secondary winding (SW2) and with its cathode connected to the second positive converter terminal (P2);
- a ninth clamping diode (D9) connected with its anode to the second secondary terminal (73) of the third secondary winding (SW3) and with its cathode connected to the second positive converter terminal (P2); and
wherein the three further clamping diodes (D10, D11, D12) between the second negative converter terminal (N2) and each of the second secondary terminals (71, 73, 75) of the secondary windings (SW1, SW2, SW3) comprise:
- a tenth diode (D10) connected with its anode to the second negative converter terminal (N2) and with its cathode connected to the second secondary terminal (71) of the first secondary winding (SW1);
- a eleventh diode (D11) connected with its anode to the second negative converter terminal (N2) and with its cathode connected to the second secondary terminal (73) of the second secondary winding (SW2);
- a twelfth diode (D12) connected with its anode to the second negative converter terminal (N2) and with its cathode connected to the second secondary terminal (75) of the third secondary winding (SW3).

15. The three phase resonant DC-DC converter (1) according to any one of the above claims, wherein the control circuit (50) is configured to increase a current (I2) flowing out from the second positive terminal (P2) for a period of time (tp1) in response to a short circuit situation is detected by the control circuit (50).
